# EUROPEAN PATENT SPECIFICATION

(11) **EP 3 780 005 B1**
(45) Date of publication and mention of the grant of the patent: **21.07.2021**
(21) Application number: 20190398.6
(22) Date of filing: 11.08.2020
(51) Int. Cl.: G21C 21/18, G21C 7/12, G21C 13/036, B23K 101/04

(54) **PREPARATION METHOD OF WEAR-RESISTANT LAYER ON THE INNER WALL OF THE HOLE FOR INCREASING THE PASS RATE OF THE PRODUCT**
HERSTELLUNGSVERFAHREN EINER VERSCHLEISSFESTEN SCHICHT AUF DER INNENWAND DES LOCHS ZUR ERHÖHUNG DER DURCHGANGSRATE DES PRODUKTS
PROCÉDÉ DE PRÉPARATION D'UNE COUCHE RÉSISTANT À L'USURE SUR LA PAROI INTÉRIEURE DE L'ORIFICE POUR AUGMENTER LA VITESSE DE PASSAGE DU PRODUIT

(30) Priority: 16.08.2019 CN 201910756911
(43) Date of publication of application: 17.02.2021
(73) Proprietor: Yu, Jie, Shanghai 200072 (CN)
(72) Inventor: Yu, Jie, Shanghai 200072 (CN)
(74) Representative: Sun, Yiming

(56) References cited:
- EP-A1- 0 026 043
- CN-A- 104 637 552
- CN-A- 105 014 184
- CN-B- 102 294 573
- US-A1- 2008 163 472
- US-A1- 2011 274 229
- US-B2- 7 520 043

## Description

### FIELD OF THE INVENTION

The present invention relates to the field of manufacturing of the part for nuclear power plant control rod driving mechanism, and more particularly to a preparation method of wear-resistant layer on the inner wall of the hole for increasing the pass rate of the product.

### BACKGROUND OF THE INVENTION

Reactor control rod driving mechanism (CRDM) is one of the key equipments of nuclear power plant, the principle of reactor control rod driving mechanism is as follows: the hook claw is driven to produce the corresponding action by controlling the regularly change of the electromagnetic field, promoting the drive rod components and further driving the control rod components up and down inside the reactor core, realizing a series of important functions such as reactor start or stop, regulate or maintain core power during normal operation and fast reactor scram under accident conditions.

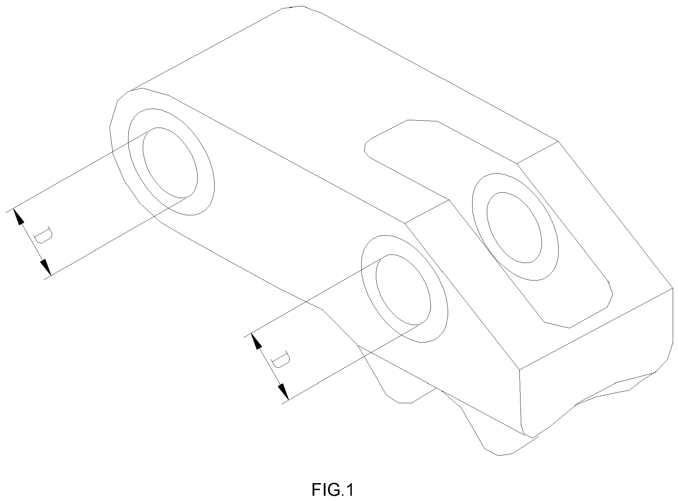

The present reactor control rod driving mechanism with the hook claw for nuclear power plants comprises two sets of upper and lower hook claw groups, and each set of hook claw groups is composed of three sets of hook claws, pin shafts and connecting rods. The hook claw is the key part in the CRDM, as shown in Figure 1, the hook claw has two holes with diameter D for pin shaft insertion. As the wear resistance, impact resistance, corrosion resistance, high temperature resistance and other properties of the hook claw are critical to the life and operational reliability of CRDM, the manufacturing requirements and inspection standards of the hook claw are very strict.

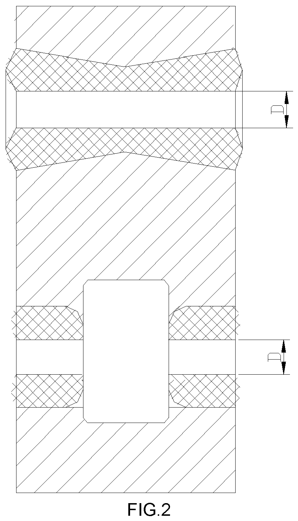

At present, there are three main molding processes of the hook claw: surfacing welding hook claw, integral casting hook claw, additive molding hook claw. The surfacing welding hook claw is obtained by surfacing welding the wear-resistant alloy layer on the moving contact surfaces of the hook claw (as shown in Figure 1, a surfacing welding layer on the inside of the hole and a hook claw tooth surfacing welding layer on the outside surface of the hook claw), which has good comprehensive performance, the most extensive practical application and the most abundant operating experience in stack. However, the current surfacing welding process has poor controllability, low pass rate, low production efficiency and high manufacturing cost. The integral casting hook claw is made as a whole by the Stellite6 alloy. Its molding process is simple and easy for mass production. However, cobalt alloy has poor impact resistance and increases the cobalt element content in the reactor. While the additive molding hook claw is still in the conceptual stage, the technology has not been fully verified and lacks of practical application experience. Therefore, in the current and new nuclear power plants, the surfacing welding hook claw will still account for the vast majority. However the manufacturing difficulty of the surfacing welding hook claws is the most, and the pass rate of the manufacturing process is the lowest. The main reason for the above problems is that the hole with the wear-resistant alloy layer needs to be obtained through surfacing welding, and the specific value of the hole diameter D is generally 9.5mm. At present, the current mature hook claw small hole welding technology, such as the patent "A molding process of the part bottom hole of control rod driving mechanism hook claw in pressure water reactor" with application number CN201410154226.7, granted and published under publication number CN105014184B, is to weld the Stellite6 wear-resistant alloy welding material on the inner wall of the prefabricated hole through the manual oxyacetylene welding method to form a hook claw billet as shown in Figure 2. In Figure 2, the slash hatching represents the base of the hook claw, which is usually made of austenitic stainless steel, and the mesh hatching represents the wear-resistant alloy welding layer. However, due to the small diameter of the prefabricated hole, the operation of oxyacetylene surfacing welding is very difficult, the detection requirements of the hook claw wear-resistant surfacing welding layer are high, and the hardness control range of the surfacing welding layer is narrow, resulting in a very low final pass rate of the surfacing welding layer, which has become a well-known process technology bottleneck in the CRDM manufacturing industry.

### BRIEF SUMMARY OF THE INVENTION

The technical problems to be solved by the present invention are as follows: in prior art, the pass rate for preparing the surfacing welding hook claw is low. The aim of the present invention is to provide a preparation method of wear-resistant layer on the inner wall of the hole for increasing the pass rate of the product, which can effectively reduce the difficulty of surfacing welding on the inner wall of the hole, so as to achieve the purpose of ensuring the quality of the surfacing welding layer and improving the pass rate of products.

For the above problems, the present invention provides a preparation method of wear-resistant layer on the inner wall of the hole for increasing the pass rate of the product to solve the problems by the following technical points: the preparation method of wear-resistant layer on the inner wall of the hole for increasing the pass rate of the product, used to obtain a wear-resistant layer on the surface of a prefabricated hole in a part, and finally obtain a hole with an inner diameter of D and a wear-resistant layer on the hole wall on the part, comprises the following steps:
S1, drilling the prefabricated hole with inner diameter D1 on the part, and D1>D; obtaining a filler core rod for welding, and the outer diameter of the filler core rod is less than D1 and greater than D;
S2, embedding the filler core rod into the prefabricated hole, and filling the gap between the filler core rod and the prefabricated hole by filling welding or self-fusion welding;
S3, drilling the hole with inner diameter D on the filler core rod, therefore, the filler core rod provides all the hole wall for the hole with inner diameter D, and the material of the filler core rod is acted as the material of the wear-resistant layer.

In this scheme, the step S1 is the preparation step to obtain the prefabricated hole and the filler core rod used to fill the prefabricated hole; the step S2 is the welding step to complete the welding of the filler core rod in the prefabricated hole, the step S3 is used for the final molding of the hole with diameter D. After the hole with diameter D is finally molded, the material of the filler core rod is used as the hole wall of the hole, that is, the material of the original filler core rod can be integrally or locally the same as that of the wear-resistant layer. When the material of the original filler core rod is locally the same as that of the wear-resistant layer, after the other materials of the filler core rod are removed by drilling, reaming and so on, the local part of the filler core rod that is consistent with the wear-resistant layer material can be used as the wear-resistant layer.

Compared with the method of welding the wear-resistant layer on the inner wall of the prefabricated hole in existing technology, the preparation method of wear-resistant layer in present invention is to insert the filler core rod into the prefabricated hole and then weld, which is equivalent to providing a boundary for welding pool: the inner wall of the prefabricated hole acts as the outside of the boundary, the outer wall of the filler core rod acts as the inside of the boundary. The present invention uses an easy gap filling welding instead of the difficult surfacing welding on the inner wall of the prefabricated hole, greatly reduces the difficulty of welding operation, achieves the purpose of improving the welding quality and the pass rate of the product. Meanwhile, Compared with surfacing welding on the inner wall of the prefabricated hole, filling welding or self-fusion welding for filling the gap between the prefabricated hole and the filler core rod can be completed by automatic welding, which not only can further ensure the quality of the product, but also facilitate the improvement of the preparation efficiency of the wear-resistant layer and the realization of mass production.

Specifically, for the drilling of the prefabricated hole in step S1, the prefabricated hole is preferably set as a tapered hole, and the tapered hole is any one of the following two types: the first one, along the axial direction of the prefabricated hole, the diameter of the prefabricated hole continuously decreases from one end to the other end of the prefabricated hole, and the diameter of the smallest position of the prefabricated hole is also greater than D; the second one, along the axial direction of the prefabricated hole, the diameter of the prefabricated hole first continuously decreases and then continuously increases from one end to the other end of the prefabricated hole, and the diameter of the smallest position of the prefabricated hole is also greater than D. In the present invention, performing filler welding or self-fusion welding, for the first case above, welding can be performed from the large end of the prefabricated hole, and the smallest position of the prefabricated hole can limit the flow of hot melt metal, which is beneficial for welding; for the second case above, welding can be performed separately from different ends of the prefabricated hole, and the smallest position of the prefabricated hole can limit the flow of hot melt metal, which is beneficial for welding. If the part is a hook claw on the control rod driving mechanism, in order to improve the welding quality and facilitate operation, the first case is suitable for welding two short prefabricated holes of the hook claw, and the large end of the prefabricated hole is connected to the outer side of the hook claw; the second case is suitable for welding long prefabricated hole of the hook claw.

The final molded hole with diameter D in the step S3 can be obtained by drilling and reaming the filler core rod after welding, or may be a hole with diameter D on the previous filler core rod, that is, in the latter case, the step S3 can be obtained directly after the welding in step S2 is completed. In order to get better surface quality of the wall of hole, the hole obtained in the former case is preferred.

As a person skilled in the art, it is preferable that the length of the filler core rod is greater than or equal to the length of the prefabricated hole, so as to finally obtain a hole with diameter D extending from one end to the other end of the prefabricated hole.

The further technical scheme is as follows: as a specific implementation, the filler core rod is a hollow rod with a center hole.

The outer diameter of the filler core rod D2 meets the following relationship: D1 >D2>D, the diameter of the center hole D3 meets the following relationship: D3≤D, the material of the filler core rod is the same as that of the wear-resistant layer. In the scheme, a tubular filler core rod is used to embed into the prefabricated hole to obtain the final hole on the filler core rod after filling welding, which facilitates the processing of the final hole.

As mentioned above, it is needed to be welded after embedding the filler core rod into the prefabricated hole. In order to eliminate the surface layer of the center hole of the filler core rod to benefit the quality of the hole wall, D3<D was selected. Therefore, in step S3, the hole with the inner diameter D is obtained as follows: reaming the center hole to obtain the hole with the inner diameter D.

As another specific implementation, the filler core rod is a solid rod, and the overall material of the filler core rod is the same as that of the wear-resistant layer.

In step S3, the hole with the inner diameter of D is obtained as follows: drilling the filler core rod to obtain the hole with the inner diameter of D.

As a further specific implementation, the filler core rod is a solid rod, and the solid rod comprises an outer layer and a filler rod wrapped inside of the outer layer. The material of the outer layer is the same as that of the wear-resistant layer, and the shape of the outer layer is cylindrical. The outer diameter of the outer layer D4 meets the following relationship: D1 >D4>D, the inner diameter of the outer layer D5 meets the following relationship: D5≤D.

The filler core rod is obtained by surfacing welding on the outside of the filler rod to form the outer layer. The implementations using the tubular filler core rod and the solid filler core rod with the same overall material as the wear-resistant layer material both require prefabricated filler core rod, but the general part manufacturing enterprises do not have the overall molding ability of filler core rod. In this scheme, the outer layer consistent with the wear-resistant layer material can be obtained by surfacing welding on the filler rod, that is, the scheme provides an easy implementation to obtain the filler core rod. Surfacing welding on the outside of the filler rod to obtain the outer layer is convenient to operate. Therefore, the automatic welding equipment can be used to realize the surfacing welding, which is not only beneficial to the welding quality, but also to the welding efficiency. Compared with the filler rod that uses a pipe, the filler rod using the solid rod is more difficult to deform when surfacing welding, so that the inner boundary shape of the outer layer can be accurately. Therefore, the diameter of the filler rod can be selected to be more close to the value D, for example, the diameter of the filler rod can be equal to D or slightly less than D. When the diameter of the filler rod is less than D, for example, the diameter of the filler rod can be 0.3-3mm less than D. In the process of obtaining the hole with diameter D in step S3, the thickness of the outer layer to be processed is smaller, which is convenient to implement the step S3.

As a further specific implementation, the filler core rod is a hollow rod, the hollow rod comprises an outer layer and a hollow pipe wrapped inside of the outer layer. The material of the outer layer is the same as that of the wear-resistant layer, and the shape of the outer layer is cylindrical. The outer diameter of the outer layer D4 meets the following relationship: D1 >D4>D, the inner diameter of the outer layer D5 meets the following relationship: D5≤D.

The filler core rod is obtained by surfacing welding on the outside of the hollow pipe to form the outer layer. This scheme is convenient for removal processing of the hollow pipe to obtain the hole with diameter D on the inside of the outer layer.

In order to ensure the surface quality of the hole with diameter D, D5<D was selected. Therefore, in step S3, the hole with the inner diameter D is obtained as follows: drilling the filler core rod and removing the filler rod to obtain the hole with the inner diameter D on the outer layer.

In order to ensure the product pass rate and optimize the production cost, the preparation method further comprises a flaw detection step for the filler core rod after obtaining the filler core rod, the filler core rod used in step S2 is the one that has passed the flaw detection. One or more combinations of UT, PT and RT can be used for flaw detection.

In order to facilitate the welding quality between the filler core rod and the wall of the prefabricated hole, the preparation method further comprises a machining step for the outer shape of the outer layer after obtaining the filler core rod, wherein the machining step comprises a grinding process to increase the smoothness of the outside of the outer layer by grinding the outside of the outer layer;
the filler core rod used in step S2 is the one that has passed the machining step.

As a further specific implementation, the part is a hook claw or a connecting rod for the control rod driving mechanism, and the material of the wear-resistant layer is Stellite6 alloy. The present scheme provides an easy preparation method of the hook claw or the connecting rod for increasing the pass rate of the product. This scheme uses the method of welding on the filler rod to obtain the filler core rod, which not only reduces the material cost of the filler core rod, but also makes it easier to obtain the hole with diameter D. As the filler rod is used as the substrate for surfacing welding to obtain the outer layer, the requirement of the filler rod only needs to fit well with the outer layer. The filler rod can use the material that is easier to process than the outer layer material. After the welding of the filler core rod and the prefabricated hole is completed, the filler rod is removed by drilling, and then the inner material of the outer layer is removed by means such as grinding, and finally the hole with diameter D can be obtained by reaming the drilled hole. In order to improve the surfacing welding quality of the method of welding on the filler rod to obtain the filler core rod, the filler rod uses ferrite rod, such as stainless steel, specifically stainless steel 304.

The invention has the following beneficial effects:
Compared with the method of welding the wear-resistant layer on the inner wall of the prefabricated hole in existing technology, the preparation method of wear-resistant layer in present invention is to insert the filler core rod into the prefabricated hole and then weld, which is equivalent to providing a boundary for welding pool: the inner wall of the prefabricated hole acts as the outside of the boundary, the outer wall of the filler core rod acts as the inside of the boundary. The present invention uses an easy gap filling welding instead of the difficult surfacing welding on the inner wall of the prefabricated hole, greatly reduces the difficulty of welding operation, achieves the purpose of improving the welding quality and the pass rate of the product. Meanwhile, Compared with surfacing welding on the inner wall of the prefabricated hole, filling welding or self-fusion welding for filling the gap between the prefabricated hole and the filler core rod can be completed by automatic welding, which not only can further ensure the quality of the product, but also facilitate the improvement of the preparation efficiency of the wear-resistant layer and the realization of mass production.

### BRIEF DESCRIPTION OF THE DRAWINGS

FIG. 1 is a three-dimensional structure schematic view of a specific embodiment of the hook claw used in the existing control rod driving mechanism;
FIG. 2 is a section structure schematic view of a specific embodiment of the hook claw used in the existing control rod driving mechanism, wherein the hole on the upper side is a long hole, and the two coaxial holes on the lower side are short holes;
FIG. 3 is a top schematic view of the structure of the filler core rod obtained by welding on the hollow pipe or filler rod of a specific embodiment of the preparation method of wear-resistant layer on the inner wall of the hole for increasing the pass rate of the product;
FIG. 4 is a section structure schematic view of the filler core rod obtained by welding on the hollow pipe or filler rod of a specific embodiment of the preparation method of wear-resistant layer on the inner wall of the hole for increasing the pass rate of the product;
FIG. 5 is a section structure schematic view of the part with the prefabricated hole of a specific embodiment of the preparation method of wear-resistant layer on the inner wall of the hole for increasing the pass rate of the product;
FIG. 6 is a section view of the part obtained after welding the filler core rod with the prefabricated hole of a specific embodiment of the preparation method of wear-resistant layer on the inner wall of the hole for increasing the pass rate of the product, wherein the diameter of the prefabricated hole first continuously decreases and then continuously increases from one end to the other end of the prefabricated hole;
FIG. 7 is a section view of the part obtained after welding the filler core rod with the prefabricated hole of a specific embodiment of the preparation method of wear-resistant layer on the inner wall of the hole for increasing the pass rate of the product, wherein the diameter of the prefabricated hole continuously decreases or continuously increases from one end to the other end of the prefabricated hole.

The marks in the drawings are respectively as follows: 1. filler core rod, 2. hollow pipe, 3. outer layer, 4. filler rod, 5. part, 6. prefabricated hole, 7. gap.

### DETAILED DESCRIPTION OF THE PREFERRED EMBODIMENTS

In order to make the purpose, technical scheme and advantages of the present invention more clarity and understanding, a further detailed description of the present invention is provided in conjunction with embodiments and drawings. The schematic embodiment of the present invention and its description are only used to explain the present invention, but not served as a qualification for the present invention.

### Embodiment 1

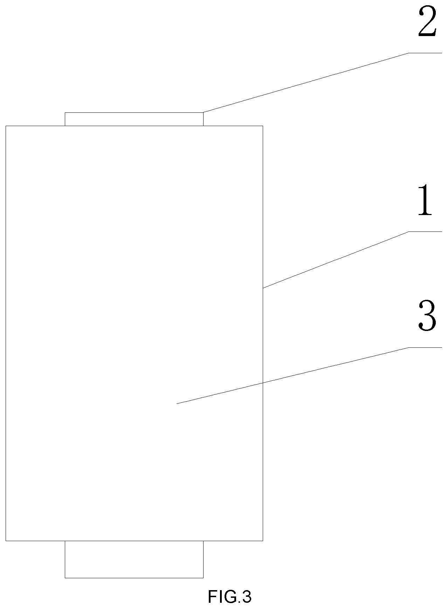

As shown in Fig.3 to Fig.7, a preparation method of wear-resistant layer on the inner wall of the hole for increasing the pass rate of the product, used to obtain a wear-resistant layer on the surface of a prefabricated hole 6 in a part, and finally obtain a hole with an inner diameter of D and a wear-resistant layer on the hole wall on the part, comprises the following steps:
S1, drilling the prefabricated hole 6 with inner diameter D1 on the part 6 and D1>D; obtaining a filler core rod for welding, and the outer diameter of the filler core rod is less than D1 and greater than D;
S2, embedding the filler core rod 1 into the prefabricated hole 6, and filling the gap 7 between the filler core rod 1 and the prefabricated hole 6 by filling welding or self-fusion welding;
S3, drilling the hole with inner diameter D on the filler core rod 1, therefore, the filler core rod 1 provides all the hole wall for the hole with inner diameter D, and the material of the filler core rod 1 is acted as the material of the wear-resistant layer.

In this scheme, the step S1 is the preparation step to obtain the prefabricated hole 6 and the filler core rod 1 used to fill the prefabricated hole 6; the step S2 is the welding step to complete the welding of the filler core rod 1 in the prefabricated hole 6, the step S3 is used for the final molding of the hole with diameter D. After the hole with diameter D is finally molded, the material of the filler core rod 1 is used as the hole wall of the hole, that is, the material of the original filler core rod 1 can be integrally or locally the same as that of the wear-resistant layer. When the material of the original filler core rod 1 is locally the same as that of the wear-resistant layer, after the other materials of the filler core 1 rod are removed by drilling, reaming and so on, the local part of the filler core rod that is consistent with the wear-resistant layer material can be used as the wear-resistant layer.

Compared with the method of welding the wear-resistant layer on the inner wall of the prefabricated hole 6 in existing technology, the preparation method of wear-resistant layer in present invention is to insert the filler core rod into 1 the prefabricated hole 6 and then weld, which is equivalent to providing a boundary for welding pool: the inner wall of the prefabricated hole 6 acts as the outside of the boundary, the outer wall of the filler core rod 1 acts as the inside of the boundary. The present invention uses an easy gap filling welding instead of the difficult surfacing welding on the inner wall of the prefabricated hole 6, greatly reduces the difficulty of welding operation, achieves the purpose of improving the welding quality and the pass rate of the product. Meanwhile, Compared with surfacing welding on the inner wall of the prefabricated hole 6, filling welding or self-fusion welding for filling the gap between the prefabricated hole 6 and the filler core rod 1 can be completed by automatic welding, which not only can further ensure the quality of the product, but also facilitate the improvement of the preparation efficiency of the wear-resistant layer and the realization of mass production.

Specifically, for the drilling of the prefabricated hole 6 in step S1, the prefabricated hole 6 is preferably set as a tapered hole, and the tapered hole is any one of the following two types: the first one, along the axial direction of the prefabricated hole 6, the diameter of the prefabricated hole 6 continuously decreases from one end to the other end of the prefabricated hole 6, and the diameter of the smallest position of the prefabricated hole 6 is also greater than D; the second one, along the axial direction of the prefabricated hole 6, the diameter of the prefabricated hole 6 first continuously decreases and then continuously increases from one end to the other end of the prefabricated hole 6, and the diameter of the smallest position of the prefabricated hole 6 is also greater than D. In the present invention, performing filler welding or self-fusion welding, for the first case above, welding can be performed from the large end of the prefabricated hole 6, and the smallest position of the prefabricated hole 6 can limit the flow of hot melt metal, which is beneficial for welding; for the second case above, welding can be performed separately from different ends of the prefabricated hole 6, and the smallest position of the prefabricated hole 6 can limit the flow of hot melt metal, which is beneficial for welding. If the part 6 is a hook claw on the control rod driving mechanism, in order to improve the welding quality and facilitate operation, the first case is suitable for welding two short prefabricated holes of the hook claw, and the large end of the prefabricated hole 6 is connected to the outer side of the hook claw; the second case is suitable for welding long prefabricated hole of the hook claw.

The final molded hole with diameter D in the step S3 can be obtained by drilling and reaming the filler core rod 1 after welding, or may be a hole with diameter D on the previous filler core rod, that is, in the latter case, the step S3 can be obtained directly after the welding in step S2 is completed. In order to get better surface quality of the wall of hole, the hole obtained in the former case is preferred.

As a person skilled in the art, it is preferable that the length of the filler core rod 1 is greater than or equal to the length of the prefabricated hole 6, so as to finally obtain a hole with diameter D extending from one end to the other end of the prefabricated hole 6.

### Embodiment 2

The embodiment is further limited on the basis of embodiment 1. As a specific implementation, the filler core rod is a hollow rod with a center hole.

The outer diameter of the filler core rod D2 meets the following relationship: D1>D2>D, the diameter of the center hole D3 meets the following relationship: D3≤D, the material of the filler core rod 1 is the same as that of the wear-resistant layer. In the scheme, a tubular filler core rod is used to embed into the prefabricated hole 6 to obtain the final hole on the filler core rod 1 after filling welding, which facilitates the processing of the final hole.

### Embodiment 3

The embodiment is further limited on the basis of embodiment 1. As mentioned above, it is needs to be welded after embedding the filler core rod 1 into the prefabricated hole 6. In order to eliminate the surface layer of the center hole of the filler core rod 1 to benefit the quality of the hole wall, D3<D was selected. Therefore, in step S3, the hole with the inner diameter D is obtained as follows: reaming the center hole to obtain the hole with the inner diameter D.

### Embodiment 4

The embodiment is further limited on the basis of embodiment 1. As a further specific implementation, the filler core rod 1 is a solid rod, and the overall material of the filler core rod 1 is the same as that of the wear-resistant layer.

In step S3, the hole with the inner diameter D is obtained as follows: drilling the filler core rod 1 to obtain the hole with the inner diameter D.

### Embodiment 5

The embodiment is further limited on the basis of embodiment 1. As a further specific implementation, the filler core rod 1 is a solid rod, and the solid rod comprises an outer layer 3 and a filler rod 4 wrapped inside of the outer layer 3. The material of the outer layer 3 is the same as that of the wear-resistant layer, and the shape of the outer layer 3 is cylindrical. The outer diameter of the outer layer D4 meets the following relationship: D1>D4>D, the inner diameter of the outer layer D5 meets the following relationship: D5≤D.

The filler core rod 1 is obtained by surfacing welding on the outside of the filler rod 4 to form the outer layer 3. The implementations using the tubular filler core rod 1 and the solid filler core rod 1 with the same overall material as the wear-resistant layer material both require prefabricated filler core rod, but the general part 5 manufacturing enterprises do not have the overall molding ability of filler core rod 1. In this scheme, the outer layer 3 consistent with the wear-resistant layer material can be obtained by surfacing welding on the filler rod 4, that is, the scheme provides an easy implementation to obtain the filler core rod 1. Surfacing welding on the outside of the filler rod 4 to obtain the outer layer 3 is convenient to operate. Therefore, the automatic welding equipment can be used to realize the surfacing welding, which is not only beneficial to the welding quality, but also to the welding efficiency. Compared with the filler rod that uses a pipe, the filler rod 4 using the solid rod is more difficult to deform when surfacing welding, so that the inner boundary shape of the outer layer 3 can be accurately. Therefore, the diameter of the filler rod 4 can be selected to be more close to the value D, for example, the diameter of the filler rod 4 can be equal to D or slightly less than D. When the diameter of the filler rod 4 is less than D, for example, the diameter of the filler rod 4 can be 0.3-3mm less than D. In the process of obtaining the hole with diameter D in step S3, the thickness of the outer layer to be processed is smaller, which is convenient to implement the step S3.

### Embodiment 6

The embodiment is further limited on the basis of embodiment 1. As a further specific implementation, the filler core rod 1 is a hollow rod, the hollow rod comprises an outer layer 3 and a hollow pipe 2 wrapped inside of the outer layer. The material of the outer layer 3 is the same as that of the wear-resistant layer, and the shape of the outer layer 3 is cylindrical. The outer diameter of the outer layer D4 meets the following relationship: D1>D4>D, the inner diameter of the outer layer D5 meets the following relationship: D5≤D.

The filler core rod 1 is obtained by surfacing welding on the outside of the hollow pipe 2 to form the outer layer 3. This scheme is convenient for removal processing of the hollow pipe 2 to obtain the hole with diameter D on the inside of the outer layer 3.

### Embodiment 7

The embodiment is further limited on the basis of embodiment 5 or embodiment 6. In order to ensure the surface quality of the hole with diameter D, D5<D was selected. Therefore, in step S3, the hole with the inner diameter D is obtained as follows: drilling the filler core rod 1 and removing the filler rod 4 to obtain the hole with the inner diameter D on the outer layer.

### Embodiment 8

The embodiment is further limited on the basis of embodiment 5 or embodiment 6. In order to ensure the product pass rate and optimize the production cost, the preparation method further comprises a flaw detection step for the filler core rod 1 after obtaining the filler core rod 1, the filler core rod 1 used in step S2 is the one that has passed the flaw detection. One or more combinations of UT, PT and RT can be used for flaw detection.

### Embodiment 9

The embodiment is further limited on the basis of embodiment 5 or embodiment 6. In order to facilitate the welding quality between the filler core rod 1 and the wall of the prefabricated hole 6, the preparation method further comprises a machining step for the outer shape of the outer layer 3 after obtaining the filler core rod 1, wherein the machining step comprises a grinding process to increase the smoothness of the outside of the outer layer 3 by grinding the outside of the outer layer 3;
the filler core rod 1 used in step S2 is the one that has passed the machining step.

### Embodiment 10

The embodiment is further limited on the basis of any of the above embodiments. As a further specific implementation, the part 5 is a hook claw or a connecting rod for the control rod driving mechanism, and the material of the wear-resistant layer is Stellite6 alloy. The present scheme provides an easy preparation method of the hook claw or the connecting rod for increasing the pass rate of the product. This scheme uses the method of welding on the filler rod 4 to obtain the filler core rod 1, which not only reduces the material cost of the filler core rod 1, but also makes it easier to obtain the hole with diameter D. As the filler rod 4 is used as the substrate for surfacing welding to obtain the outer layer 3, the requirement of the filler rod 4 only needs to fit well with the outer layer 3. The filler rod 4 can use the material that is easier to process than the outer layer 3 material. After the welding of the filler core rod 1 and the prefabricated hole 6 is completed, the filler rod 4 is removed by drilling, and then the inner material of the outer layer 3 is removed by means such as grinding, and finally the hole with diameter D can be obtained by reaming the drilled hole. In order to improve the surfacing welding quality of the method of welding on the filler rod 4 to obtain the filler core rod 1, the filler rod 4 uses ferrite rod, such as stainless steel, specifically 304 stainless steel.

### Embodiment 11

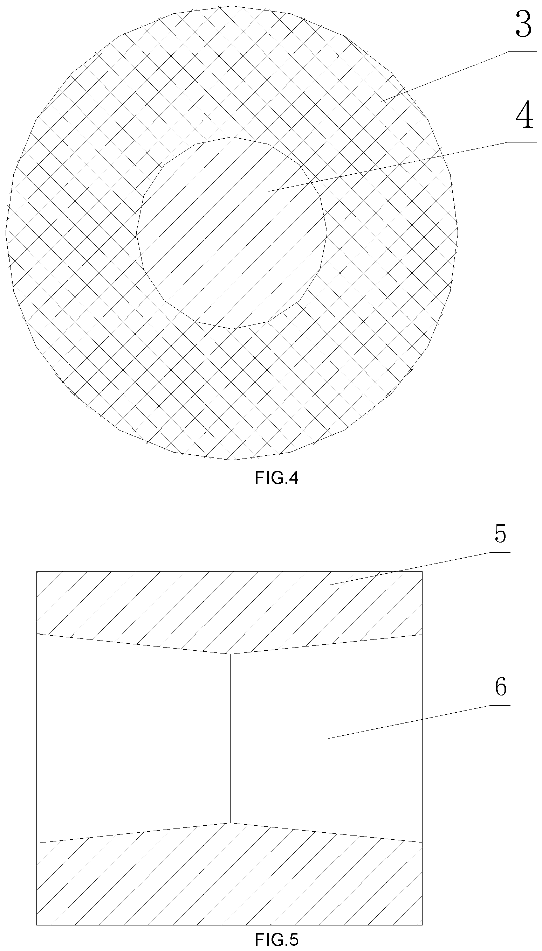

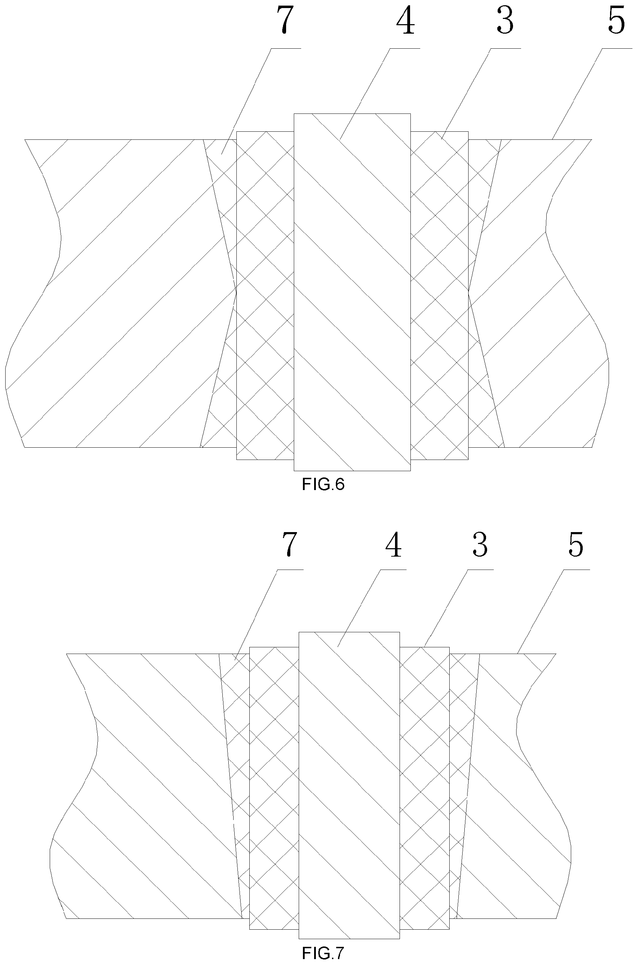

The embodiment is further limited on the basis of embodiment 10. In order to make the purposes, features and advantages of the present invention more obvious and understandable, the present invention provides the preparation method of the wear-resistant layer on the hook claw to further explain the present invention in detail, is as follows:
1. A wear-resistant alloy layer with sufficient thickness is welded on the outer surface of the round steel or the hollow pipe 2 to obtain the filler core rod 1, as shown in Fig.3 or Fig.4. Wherein, the diameter of the round steel (filler rod 4) or the hollow pipe 2 is 7.5 mm, and the final size D of the hole on the hook claw is 9.5 mm, the round steel or the hollow tube 2 uses 304 stainless steel, the surfacing welding layer obtained by oxyacetylene surfacing welding is Stellite6 alloy.
2. Machining the outsider surface of the filler core rod 1 obtained in previous step by turning and grinding to obtain a high quality outer surface of the surfacing welding layer, and then finding and identifying the defects in the surfacing welding layer by UT+PT flaw detection.
3. According to the object filled by the filler core rod 1, the qualified filler core rod 1 after flaw detection in previous step is cut to a suitable length. For example, for the long hole on the hook claw, the length shall be no less than the length of the long hole, and for the short hole on the hook claw, the length shall be no less than the length of the short hole.
4. The prefabricated hole 6 shown in Fig.5 (or shown in Fig.7) is machined on the hook claw, and then the filler core rod 1 is placed into the prefabricated hole 6 to obtain the matching relationship shown in Fig.6 between the part 5 and the filler core rod 1.
5. Vacuum electron beam welding is performed in the gap shown in Fig.6. In the welding process, filling the satellite 6 powder welding material into the gap 7, first filling the gap 7 on one end of the prefabricated hole completely, and then turning over the part 5 to completely fill the gap 7 on the other end of the prefabricated hole 6. For the prefabricated hole 6 shown in Fig.7, the vacuum electron beam welding can perform from the wider end of the gap 7, and then fully fill the gap 7, which is especially suitable for the welding of the short hole of the hook claw, and also especially suitable for the manufacture of the surfacing welding layer of the connecting rod of the same type CRDM part 5.
6. After the welding of the part 5 and the filler core rod 1 is completed in the above steps, machining the hook claw to finally obtain the qualified hook claw shown in Fig.1 and Fig.2.

Compared with the prior art, this embodiment has the following beneficial effects:
1.The manufacturing method of the small hole surfacing welding layer on the hook claw of the control rod driving mechanism provided by the present invention replaces the surfacing welding on the inner wall of the small hole that is difficult to operate with the surfacing welding on the outer wall of the round steel or hollow pipe 2 that is easy to operate, which can greatly reduce the difficulty of the surfacing welding operation; the manufacturing method has the characteristics of reliable welding quality, automatic welding, low cost and high pass rate of the filler core rod 1 preparation, which is beneficial to mass production.
2. The manufacturing method provided by the present invention is suitable for manufacturing the surfacing welding layer of the connecting rod of the same type CRDM part 5.
3. The manufacturing method provided by the present invention can perform comprehensive flaw detection on the surfacing welding layer on the outside of the round steel or hollow pipe 2, which greatly improves the qualified rate of the final products of the hook claw and connecting rod, thereby reducing the comprehensive manufacturing cost of the finished products.

The above is a further detailed description of the invention in combination with the specific preferred embodiment, it is to be understood that the invention needs not be limited to the disclosed embodiments. On the contrary, it is intended to cover various modifications and similar arrangements included within the scope of the appended claims.

## Claims

1. A preparation method of a wear-resistant layer on the inner wall of a hole in a hook claw of a control rod driving mechanism for increasing the pass rate of a product which comprises the hook claw of a control rod driving mechanism, used to obtain a wear-resistant layer on the surface of a prefabricated hole in a part which comprises the hook claw of a control rod driving mechanism, and finally obtain a hole with an inner diameter of D and a wear-resistant layer on the hole wall on the part,
**characterized in that**, the preparation method comprises the following steps:
S1, drilling a hole with an inner diameter of D1 on the part, and D1 > D, to obtain the prefabricated hole (6); obtaining a filler core rod for welding, and the outer diameter of the filler core rod is less than D1 and greater than D, leaving a gap (7) between the prefabricated hole (6) and the filler core rod (1);
S2, embedding the filler core rod into the prefabricated hole, and filling the gap between the filler core rod and the prefabricated hole by filling welding or self-fusion welding;
S3, drilling the hole with the inner diameter of D on the filler core rod, therefore, the filler core rod provides all the hole wall for the hole with the inner diameter of D, and the material of the filler core rod is acted as the material of the wear-resistant layer.

2. The preparation method of wear-resistant layer on the inner wall of the hole for increasing the pass rate of the product according to claim 1, **characterized in that**, the filler core rod is a hollow rod with a center hole; the outer diameter of the filler core rod D2 meets the following relationship: D1>D2>D, the diameter of the center hole D3 meets the following relationship: D3≤D, and the material of the filler core rod is the same as that of the wear-resistant layer.

3. The preparation method of wear-resistant layer on the inner wall of the hole for increasing the pass rate of the product according to claim 2, **characterized in that**, when D3<D, in step S3, the hole with the inner diameter of D is obtained as follows: reaming the center hole to obtain the hole with the inner diameter of D.

4. The preparation method of wear-resistant layer on the inner wall of the hole for increasing the pass rate of the product according to claim 1, **characterized in that**, the filler core rod is a solid rod, and the overall material of the filler core rod is the same as that of the wear-resistant layer;
in step S3, the hole with the inner diameter of D is obtained as follows: drilling the filler core rod to obtain the hole with the inner diameter of D.

5. The preparation method of wear-resistant layer on the inner wall of the hole for increasing the pass rate of the product according to claim 1, **characterized in that**, the filler core rod is a solid rod, the solid rod comprises an outer layer and a filler rod wrapped inside of the outer layer, the material of the outer layer is the same as that of the wear-resistant layer, and the shape of the outer layer is cylindrical; the outer diameter of the outer layer D4 meets the following relationship: D1>D4>D, the inner diameter of the outer layer D5 meets the following relationship: D5≤D; the filler core rod is obtained by surfacing welding on the outside of the filler rod to form the outer layer.

6. The preparation method of wear-resistant layer on the inner wall of the hole for increasing the pass rate of the product according to claim 5, **characterized in that**, when D5<D, in step S3, the hole with the inner diameter of D is obtained as follows: reaming the filler core rod and removing the filler rod to obtain the hole with the inner diameter of D on the outer layer.

7. The preparation method of wear-resistant layer on the inner wall of the hole for increasing the pass rate of the product according to claim 5, **characterized in that**, the preparation method further comprises a flaw detection step for the filler core rod after obtaining the filler core rod, the filler core rod used in step S2 is the one that has passed the flaw detection.

8. The preparation method of wear-resistant layer on the inner wall of the hole for increasing the pass rate of the product according to claim 5, **characterized in that**, the preparation method further comprises a machining step for the outer shape of the outer layer after obtaining the filler core rod, wherein the machining step comprises a grinding process to increase the smoothness of the outside of the outer layer by grinding the outside of the outer layer; and the filler core rod used in step S2 is the one that has passed the machining step.

9. The preparation method of wear-resistant layer on the inner wall of the hole for increasing the pass rate of the product according to claim 1, **characterized in that**, the filler core rod is a hollow rod, the hollow rod comprises an outer layer and a hollow pipe wrapped inside of the outer layer, the material of the outer layer is the same as that of the wear-resistant layer, and the shape of the outer layer is cylindrical; the outer diameter of the outer layer D4 meets the following relationship: D1 >D4>D, the inner diameter of the outer layer D5 meets the following relationship: D5≤D; the filler core rod is obtained by surfacing welding on the outside of the hollow pipe to form the outer layer.

10. The preparation method of wear-resistant layer on the inner wall of the hole for increasing the pass rate of the product according to any of claims 1-9, **characterized in that**, the part is a hook claw or a connecting rod for the control rod driving mechanism, and the material of the wear-resistant layer is Stellite6 alloy.

## Patentansprüche

1. Herstellungsverfahren einer Verschleißschutzschicht auf der Innenwand eines Lochs in einer Hakenklaue einer Steuerstab-Antriebsvorrichtung zum Erhöhen der Durchlaufrate eines Produkts, das die Hakenklaue einer Steuerstab-Antriebsvorrichtung umfasst, die verwendet wird, um eine Verschleißschutzschicht auf der Oberfläche eines vorgefertigten Lochs in einem Teil zu erhalten, das die Hakenklaue einer Steuerstab-Antriebsvorrichtung umfasst, und schließlich ein Loch mit einem Innendurchmesser von D und eine Verschleißschutzschicht auf der Lochwand auf dem Teil zu erhalten,
**dadurch gekennzeichnet, dass** das Herstellungsverfahren die folgenden Schritte umfasst:
S1, Bohren eines Lochs mit einem Innendurchmesser von D1 auf dem Teil, und D1 > D, um das vorgefertigte Loch (6) zu erhalten; Erhalten eines Füllkernstabs zum Schweißen, und der Außendurchmesser des Füllkernstabs ist kleiner als D1 und größer als D, wobei ein Spalt (7) zwischen dem vorgefertigten Loch (6) und dem Füllkernstab (1) verbleibt;
S2, Einbetten des Füllkernstabs in das vorgefertigte Loch und Füllen des Spalts zwischen dem Füllkernstab und dem vorgefertigten Loch durch Füllschweißen oder Selbstschmelzschweißen;
S3, Bohren des Lochs mit dem Innendurchmesser D auf dem Füllkernstab, daher stellt der Füllkernstab die gesamte Lochwand für das Loch mit dem Innendurchmesser D bereit, und das Material des Füllkernstabs wird als das Material der Verschleißschutzschicht gehandelt.

2. Herstellungsverfahren einer Verschleißschutzschicht auf der Innenwand des Lochs zum Erhöhen der Durchlaufrate des Produkts nach Anspruch 1, **dadurch gekennzeichnet, dass** der Füllkernstab ein hohler Stab mit einem Mittelloch ist; der Außendurchmesser des Füllkernstabs D2 das folgende Verhältnis erfüllt: D1>D2>D, der Durchmesser des Mittellochs D3 das folgende Verhältnis erfüllt: D3≤D, und das Material des Füllkernstabs das gleiche wie das der Verschleißschutzschicht ist.

3. Herstellungsverfahren einer Verschleißschutzschicht auf der Innenwand des Lochs zum Erhöhen der Durchlaufrate des Produkts nach Anspruch 2, **dadurch gekennzeichnet, dass**, wenn D3<D, in Schritt S3 das Loch mit dem Innendurchmesser von D wie folgt erhalten wird: Aufbohren des Mittellochs, um das Loch mit dem Innendurchmesser von D zu erhalten.

4. Herstellungsverfahren einer Verschleißschutzschicht auf der Innenwand des Lochs zum Erhöhen der Durchlaufrate des Produkts nach Anspruch 1, **dadurch gekennzeichnet, dass** der Füllkernstab ein massiver Stab ist und das Gesamtmaterial des Füllkernstabs das gleiche ist wie das der Verschleißschutzschicht; in Schritt S3 wird das Loch mit dem Innendurchmesser D wie folgt erhalten: Bohren des Füllkernstabs, um das Loch mit dem Innendurchmesser D zu erhalten.

5. Herstellungsverfahren einer Verschleißschutzschicht auf der Innenwand des Lochs zum Erhöhen der Durchlaufrate des Produkts nach Anspruch 1, **dadurch gekennzeichnet, dass** der Füllkernstab ein massiver Stab ist, wobei der massive Stab eine äußere Schicht und einen Füllkernstab umfasst, der in die äußere Schicht eingewickelt ist, das Material der äußeren Schicht das gleiche ist wie das der Verschleißschutzschicht und die Form der äußeren Schicht zylindrisch ist; der Außendurchmesser der äußeren Schicht D4 das folgende Verhältnis erfüllt: D1>D4>D, der Innendurchmesser der Außenschicht D5 das folgende Verhältnis erfüllt: D5≤D; der Füllkernstab durch Auftragsschweißen auf der Außenseite des Füllkerns erhalten wird, um die Außenschicht zu bilden.

6. Herstellungsverfahren einer Verschleißschutzschicht auf der Innenwand des Lochs zum Erhöhen der Durchlaufrate des Produkts nach Anspruch 5, **dadurch gekennzeichnet, dass**, wenn D5<D, in Schritt S3 das Loch mit dem Innendurchmesser von D wie folgt erhalten wird: Aufbohren des Füllkernstabs und Entfernen des Füllstabs, um das Loch mit dem Innendurchmesser von D auf der Außenschicht zu erhalten.

7. Herstellungsverfahren einer Verschleißschutzschicht auf der Innenwand des Lochs zum Erhöhen der Durchlaufrate des Produkts nach Anspruch 5, **dadurch gekennzeichnet, dass** das Herstellungsverfahren ferner einen Schritt zur Fehlererkennung für den Füllkernstab umfasst, nachdem der Füllkernstab erhalten wurde, wobei der in Schritt S2 verwendete Füllkernstab derjenige ist, der die Fehlererkennung bestanden hat.

8. Herstellungsverfahren einer Verschleißschutzschicht auf der Innenwand des Lochs zum Erhöhen der Durchlaufrate des Produkts nach Anspruch 5, **dadurch gekennzeichnet, dass** das Herstellungsverfahren ferner einen Bearbeitungsschritt für die äußere Form der äußeren Schicht nach Erhalt des Füllkernstabs umfasst, wobei der Bearbeitungsschritt einen Schleifprozess umfasst, um die Glätte der Außenseite der äußeren Schicht durch Schleifen der Außenseite der äußeren Schicht zu erhöhen; und der in Schritt S2 verwendete Füllkernstab derjenige ist, der den Bearbeitungsschritt durchlaufen hat.

9. Herstellungsverfahren einer Verschleißschutzschicht auf der Innenwand des Lochs zum Erhöhen der Durchlaufrate des Produkts nach Anspruch 1, **dadurch gekennzeichnet, dass** der Füllkernstab ein hohler Stab ist, wobei der hohle Stab eine äußere Schicht und ein hohles Rohr umfasst, das in die äußere Schicht eingewickelt ist, das Material der äußeren Schicht das gleiche ist wie das der Verschleißschutzschicht und die Form der äußeren Schicht zylindrisch ist; der Außendurchmesser der äußeren Schicht D4 das folgende Verhältnis erfüllt: D1>D4>D, der Innendurchmesser der Außenschicht D5 das folgende Verhältnis erfüllt: D5≤D; der Füllkernstab durch Auftragsschweißen auf der Außenseite des hohlen Rohrs erhalten wird, um die Außenschicht zu bilden.

10. Herstellungsverfahren einer Verschleißschutzschicht auf der Innenwand des Lochs zum Erhöhen der Durchlaufrate des Produkts nach einem der Ansprüche 1 - 9, **dadurch gekennzeichnet, dass** das Teil eine Hakenklaue oder eine Verbindungsstange für die Steuerstab-Antriebsvorrichtung ist und das Material der Verschleißschutzschicht eine Stellite6-Legierung ist.

## Revendications

1. Procédé de préparation d'une couche résistant à l'usure sur la paroi intérieure d'un trou dans une griffe de crochet d'un mécanisme d'entraînement de tige de commande pour augmenter la vitesse de passage d'un produit comprenant la griffe de crochet d'un mécanisme d'entraînement de tige de commande, utilisé pour obtenir une couche résistant à l'usure sur la surface d'un trou préfabriqué dans une partie comprenant la griffe de crochet d'un mécanisme d'entraînement de tige de commande, et pour finalement obtenir un trou avec un diamètre intérieur D et une couche résistant à l'usure sur la paroi de trou dans la partie,
**caractérisé en ce que** le procédé de préparation comprend les étapes suivantes :
S1 : perçage d'un trou avec un diamètre intérieur D1 dans la partie, et D1 > D, pour obtenir le trou préfabriqué (6) ; obtention d'une tige centrale de remplissage pour le soudage, le diamètre extérieur de la tige centrale de remplissage étant inférieur à D1 et supérieur à D, laissant un jeu (7) entre le trou préfabriqué (6) et la tige centrale de remplissage (1) ;
S2 : insertion de la tige centrale de remplissage dans le trou préfabriqué, et remplissage du jeu entre la tige centrale de remplissage et le trou préfabriqué par soudage par remplissage ou par soudage par auto-fusion ;
S3 : perçage du trou avec le diamètre intérieur D sur la tige centrale de remplissage, la tige centrale de remplissage fournissant ainsi l'ensemble de la paroi de trou pour le trou avec le diamètre intérieur D, et le matériau de la tige centrale de remplissage agit comme le matériau de la couche résistant à l'usure.

2. Procédé de préparation de la couche résistant à l'usure sur la paroi intérieure du trou pour augmenter la vitesse de passage du produit selon la revendication 1, **caractérisé en ce que** la tige centrale de remplissage est une tige creuse avec un trou central ; le diamètre extérieur de la tige centrale de remplissage D2 correspond au rapport suivant: D1>D2>D, le diamètre du trou central D3 correspond au rapport suivant : D3≤D, et le matériau de la tige centrale de remplissage est le même que celui de la couche résistant à l'usure.

3. Procédé de préparation de la couche résistant à l'usure de la paroi intérieure du trou pour augmenter la vitesse de passage du produit selon la revendication 2, **caractérisé en ce que**, lorsque D3<D, dans l'étape S3, le trou avec le diamètre intérieur D est obtenu de la manière suivante : fraisage du trou central pour obtenir le trou avec le diamètre intérieur D.

4. Procédé de préparation de la couche résistant à l'usure de la paroi intérieure du trou pour augmenter la vitesse de passage du produit selon la revendication 1, **caractérisé en ce que** la tige centrale de remplissage est une tige solide, et le matériau d'ensemble de la tige centrale de remplissage est le même que celui de la couche résistant à l'usure ;
dans l'étape S3, le trou avec le diamètre intérieur D est obtenu de la manière suivante : perçage de la tige centrale de remplissage pour obtenir le trou avec le diamètre intérieur D.

5. Procédé de préparation de la couche résistant à l'usure sur la paroi intérieure du trou pour augmenter la vitesse de passage du produit selon la revendication 1, **caractérisé en ce que** la tige centrale de remplissage est une tige solide, la tige solide comprend une couche extérieure et une tige de remplissage enrobée dans la couche extérieure, le matériau de la couche extérieure est le même que celui de la couche résistant à l'usure, et la forme de la couche extérieure est cylindrique ; le diamètre extérieur de la couche extérieure D4 correspond au rapport suivant: D1>D4>D, le diamètre intérieur de la couche extérieure D5 correspond au rapport suivant : D5≤D ; la tige centrale de remplissage est obtenue par soudage de surface sur le côté extérieur de la tige de remplissage pour former la couche extérieure.

6. Procédé de préparation de la couche résistant à l'usure sur la paroi intérieure du trou pour augmenter la vitesse de passage du produit selon la revendication 5, **caractérisé en ce que**, lorsque D5<D, dans l'étape S3, le trou avec le diamètre intérieur D est obtenu de la manière suivante : fraisage de la tige centrale de remplissage et retrait de la tige de remplissage pour obtenir le trou avec le diamètre intérieur D sur la couche extérieure.

7. Procédé de préparation de la couche résistant à l'usure sur la paroi intérieure du trou pour augmenter la vitesse de passage du produit selon la revendication 5, **caractérisé en ce que** le procédé de préparation comprend en outre une étape de détection de défauts pour la tige centrale de remplissage après l'obtention de la tige centrale de remplissage, la tige centrale de remplissage utilisée dans l'étape S2 étant une tige déjà soumise à la détection de défauts.

8. Procédé de préparation de la couche résistant à l'usure sur la paroi intérieure du trou pour augmenter la vitesse de passage du produit selon la revendication 5, **caractérisé en ce que** le procédé de préparation comprend en outre une étape d'usinage pour la forme extérieure de la couche extérieure après l'obtention de la tige centrale de remplissage, dans lequel l'étape d'usinage comprend une opération de meulage permettant d'augmenter l'uniformité du côté extérieur de la couche extérieure par meulage du côté extérieur de la couche extérieure ; et la tige centrale de remplissage utilisée dans l'étape S2 est une tige déjà soumise à l'étape d'usinage.

9. Procédé de préparation de la couche résistant à l'usure sur la paroi intérieure du trou pour augmenter la vitesse de passage du produit selon la revendication 1, **caractérisé en ce que** la tige centrale de remplissage est une tige creuse, la tige creuse comprend une couche extérieure et un tube creux enrobé dans la couche extérieure, le matériau de la couche extérieure est le même que celui de la couche résistant à l'usure, et la forme de la couche extérieure est cylindrique ; le diamètre extérieur de la couche extérieure D4 correspond au rapport suivant : D1>D4>D, le diamètre intérieur de la couche extérieure D5 correspond au rapport suivant : D5≤D ; la tige centrale de remplissage est obtenue par soudage de surface sur le côté extérieur du tube creux pour former la couche extérieure.

10. Procédé de préparation de la couche résistant à l'usure sur la paroi intérieure du trou pour augmenter la vitesse de passage du produit selon l'une quelconque des revendications 1 à 9, **caractérisé en ce que** la partie est une griffe de crochet ou une tige de raccordement pour le mécanisme d'entraînement de tige de commande, et le matériau de la couche résistant à l'usure est un alliage de Stellite6.
